# EUROPEAN PATENT APPLICATION

(11) **EP 0 693 445 A1**
(43) Date of publication of application: **24.01.1996**
(21) Application number: 94111162.7
(22) Date of filing: 18.07.1994
(51) Int. Cl.: B65G 21/20

(54) **Device for preventing the accidental capsizing of containers on conveyors**

(71) Applicant: MA.CO S.r.l., I-40069 Zola Predosa (Bologna) (IT)
(72) Inventor: Risi, Roberto, I-40033 Casalecchio di Reno (Bologna) (IT)
(74) Representative: Modiano, Guido, Dr.-Ing.

(57) **Abstract**

Device for preventing the accidental capsizing of containers (2) on conveyors (1), including at least one series of levers (17) which are aligned parallel to the advancement direction (F) of the containers and are pivoted so that they are deflected by the containers to allow their passage and immediately engage behind them once they have passed.

## Description

The present invention relates to a device for preventing the accidental capsizing of containers on conveyors.

As it is known, containers on conveyance lines are often unsteadily balanced due to the impacts they receive and to the sharp accelerations and stops to which they are subjected.

This unsteady balance is increased in the case of particularly tall containers whose center of gravity is shifted towards the mouth through which the product is inserted, such as for example the plastic bottles used to contain mineral water or beverages in general.

Due to manufacturing reasons, the part related to the neck of the bottle is in fact significantly thicker than the underlying part, and therefore the center of mass ends up being at a very high level with respect to the bottom: accordingly, when a bottle abuts against other bottles at an accumulation region and tends to lift from the resting surface, for example a belt, due to the impact, its fall back onto said surface produces an overturning moment that causes the bottle to tip backward.

Various contrivances have been devised in order to obviate these drawbacks, but they have proved to be very troublesome. For example, a conveyance system has been proposed wherein the bottles are suspended with a collar (which is usually always present around the neck) between two rails and are made to advance with jets of compressed air.

In another solution, suction elements are provided on the conveyor belt and produce vacuum below the bottles, so as to retain them on the belt by suction.

A principal technical aim of the present invention is to provide a highly effective device that allows to obviate the drawbacks described in conventional systems.

A particular object of the present invention is to provide a device which is structurally simple, highly reliable in operation, and can be used with the most disparate kinds of container.

According to the invention, there is provided a device for preventing the accidental capsizing of containers on conveyors, which is characterized in that it comprises at least one series of levers which are aligned parallel to the advancement direction of the containers and are pivoted so that they are deflected by the containers to allow their passage and immediately engage behind them once they have passed.

Further characteristics and advantages of the device according to the present invention will become apparent from the following detailed description of some preferred embodiments thereof, with reference to the accompanying drawings, wherein:
figure 1 is a longitudinal partially sectional elevation view of a bottle conveyor equipped with the device according to the invention;
figure 2 is a sectional view, taken along the transverse plane II-II of figure 1;
figure 3 is an enlarged-scale sectional view of the region shown inside the circle of figure 1;
figures 4 and 5 are transverse sectional views of two further embodiments of the device;
figure 6 is a longitudinal sectional view of the device according to the embodiment of figure 4.

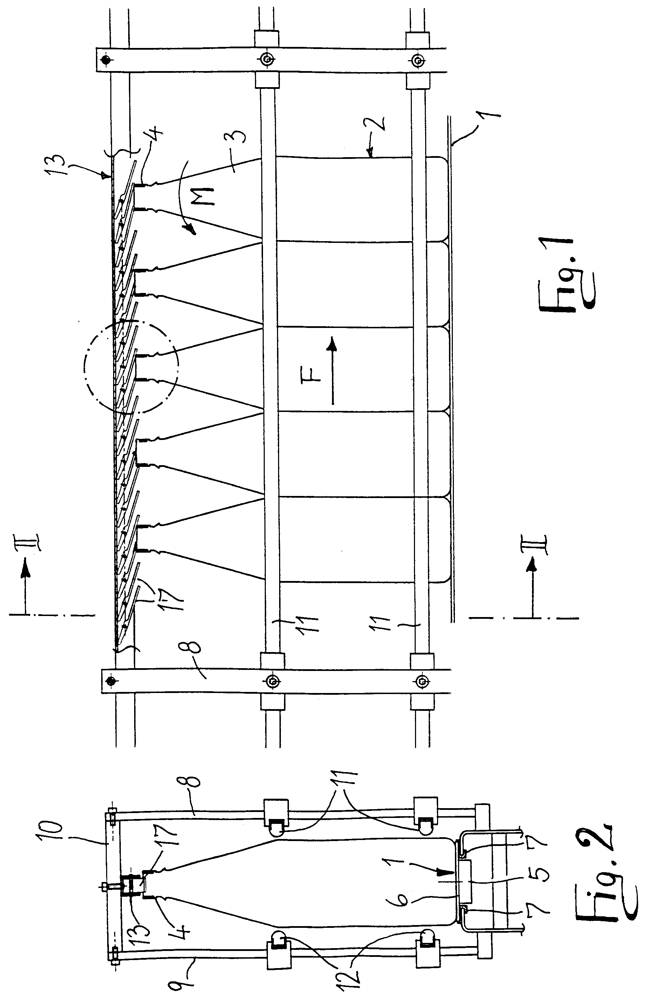

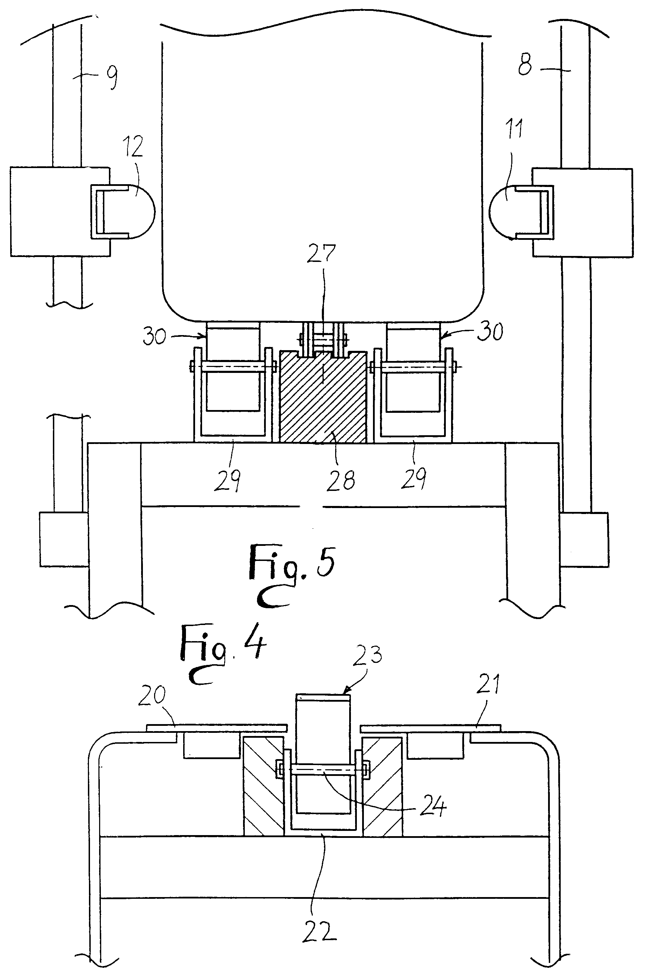

With reference to figures 1 to 3, the reference numeral 1 designates a generic conveyor for containers which in the illustrated example are constituted by cylindrical bottles 2 made of plastic material and having a conical neck 3 that ends with a threaded mouth 4 at the upper region. Of course the containers can have any shape but in any case said shape allows accumulation when the containers abut against a stop element.

The conveyor 1 comprises a flexible element 5 (belt or chain) on which a belt 6 for supporting the containers is fixed.

Said belt 6 can be continuous or of the type with plates and is guided by lateral guides generally designated by the reference numeral 7.

Pairs of posts 8 and 9 rise from the sides of the conveyor 1 and are mutually connected at their top by beams 10. The posts lying on each side of the conveyor are connected by horizontal members 11 and 12 that guide the bottles 2, keeping them aligned on a vertical plane that coincides with the centerline plane of the belt 6.

Above the bottles 2 and in their plane of arrangement there is a profiled element 13 which is fixed below the beams 10. The profiled element 13 has a cross-section shaped like an inverted U, with two vertical wings 14 that extend downwardly from the bottom 15.

A series of parallel and equidistant pins 16 is supported in the wings 14 and acts as pivot for an equal number of levers 17.

The levers 17 are constituted by plates which are slightly narrower than the distance between the wings 14 of the profiled element and comprise two mutually aligned arms 18 and 19.

The arm 18 is longer than the distance between the pins 16, is heavier than the arm 19, and extends, with respect to its fulcrum, in the direction F along which the containers advance.

Furthermore, the length of the arms 18 and 19 is chosen so that when the end of the arm 19 abuts against the bottom 15 of the profiled element 13 the arm 18 extends obliquely outside the profiled element, i.e. below the lower edges of the wings 14, to a level at which it interferes with the top of the containers 2.

The operation of the described device is as follows.

The containers 2 are moved by the conveyor 1 in the direction F.

During their advancement, the mouths 4 lift the levers 17, which immediately fall behind said mouths as soon as the ends of the arms 18 are no longer supported on the edge of the mouths 4.

In this manner, if a container 2 undergoes a backward capsizing moment M due to the friction force applied by the belt 6 to the bottom of the container (as occurs for example when an incoming container strikes the last of a series of accumulated containers), the end of the arm 18 of the lever that has just been passed drops below the level of the mouth 4 and prevents the container from rotating.

As can be seen, the device perfectly achieves the intended aim and object.

The device is susceptible to numerous modifications and variations, all of which are within the scope of the inventive concept.

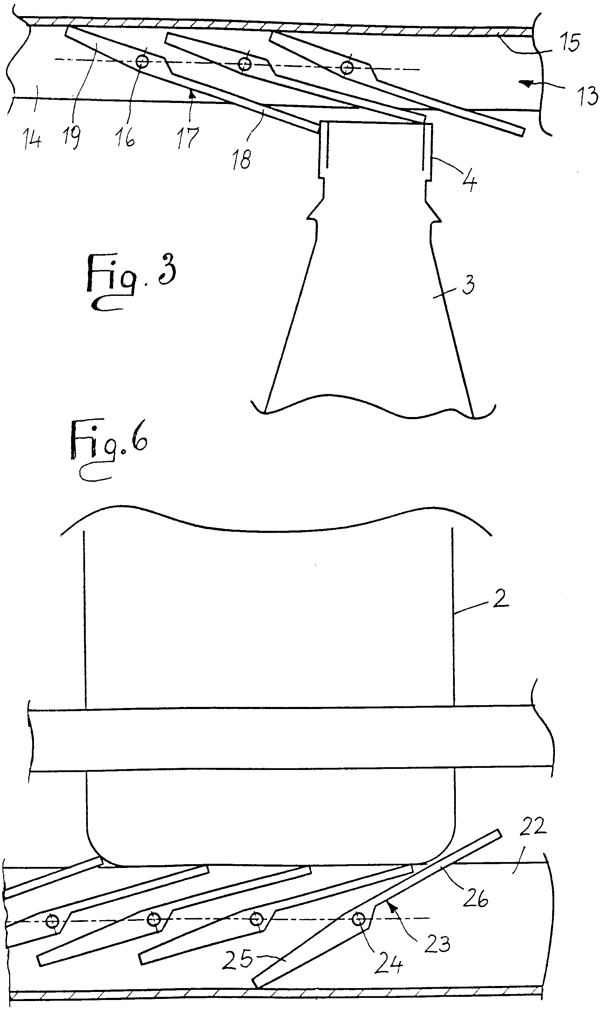

Figures 4 and 6 illustrate an embodiment in which the conveyor 1 is composed of two belts 20 and 21 between which the U-shaped profiled element 22 is arranged; the levers 23 are pivoted on the pins 24. With respect to the version of figures 1, 2 and 3, the arm 25 of the levers 23 that is meant to abut on the bottom of the profiled element 22 is heavier than the other arm 26, which can thus protrude from the profiled element 22 to act on the lower edge of the container, as shown in figure 6.

Finally, in the embodiment of figure 5 there is a conveyor which is composed of a chain 27 that is slideable on a guide 28 and acts as support for the containers.

The anti-capsizing device comprises two U-shaped profiled elements 29, each one equipped with a series of levers 30 which are identical to those of figure 6.

The provision of the device according to figures 4, 5 and 6 ensures that the containers are more stable since it not only prevents them from moving backwards but at the same time, in cooperation with the upper levers 17, maintains their upright position.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for preventing the accidental capsizing of containers (2) on conveyors (1;20,21;27), characterized in that it comprises at least one series of levers (17) which are aligned parallel to the advancement direction (F) of the containers (2) and are pivoted so that they are deflected by the containers to allow their passage and immediately engage behind them once they have passed.

2. Device according to claim 1, characterized in that it comprises a profiled element (13) which is shaped like an inverted U and extends above the containers (2), a plurality of levers (17) which are pivoted at identical distances inside said profiled element, said levers comprising a first lower arm (18) which is heavier than a second upper arm (19) and extends in the advancement direction of the containers, said arms (18, 19) having such a length that when the end of the second arm (19) abuts on the profiled element (13) the first arm (18) extends obliquely downwardly out of the profiled element (13) to a level at which it interferes with the top (4) of the containers (2).

3. Device according to one or more of the preceding claims, characterized in that it comprises at least one U-shaped profiled element (22;29) that extends below the containers (2), and a plurality of levers (23;30) which are pivoted at identical distances in said profiled element, said levers comprising a first upper arm (26) which is lighter than a second lower arm (25) and extends in the advancement direction of the containers (2), said arms (25, 26) having such a length that when the end of the second arm (25) abuts on the profiled element the first arm (26) extends obliquely upwards out of the profiled element to a level at which it interferes with the base of the containers.

4. Device according to claim 3, characterized in that it comprises two conveyor belts (20, 21) between which said profiled element (22) provided with the levers (23) is arranged.

5. Device according to claim 3, characterized in that it comprises two U-shaped profiled elements (29) which are each provided with the levers (30) and are arranged at the sides of a chain conveyor (27).

6. Device for preventing the accidental capsizing of containers on conveyors, comprising one or more of the technical features described and/or illustrated herein.
